(19) Europäisches Patentamt
European Patent Office
Office européen des brevets

(11) EP 3 968 286 A2

(12) EUROPEAN PATENT APPLICATION

(43) Date of publication:
16.03.2022 Bulletin 2022/11

(51) International Patent Classification (IPC):
*G06V 20/10* (2022.01)

(21) Application number: 22152169.3

(22) Date of filing: 19.01.2022

(52) Cooperative Patent Classification (CPC):
G06V 20/176

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.01.2021 CN 202110076617

(71) Applicant: BEIJING BAIDU NETCOM SCIENCE
TECHNOLOGY CO., LTD.
No.10 Shangdi 10th Street
Haidian District
Beijing 100085 (CN)

(72) Inventors:
• LONG, Xiang
  Beijing, 100085 (CN)
• PENG, Yan
  Beijing, 100085 (CN)
• ZHENG, Honghui
  Beijing, 100085 (CN)
• JIA, Zhuang
  Beijing, 100085 (CN)
• ZHANG, Bin
  Beijing, 100085 (CN)
• WANG, Xiaodi
  Beijing, 100085 (CN)
• YUAN, Pengcheng
  Beijing, 100085 (CN)
• XIN, Ying
  Beijing, 100085 (CN)
• FENG, Yuan
  Beijing, 100085 (CN)
• HAN, Shumin
  Beijing, 100085 (CN)

(74) Representative: Maiwald Patent- und
Rechtsanwaltsgesellschaft mbH
Elisenhof
Elisenstraße 3
80335 München (DE)

(54) **METHOD, APPARATUS, ELECTRONIC DEVICE AND STORAGE MEDIUM FOR DETECTING CHANGE OF BUILDING**

(57) The disclosure provides a method for detecting a change of a building, an apparatus for detecting a change of a building, an electronic device, a storage medium and a computer program product. The method includes: obtaining a remote-sensing image sequence of a to-be-detected region; obtaining a building probability map corresponding to each remote-sensing image in the remote-sensing image sequence; determining a sub-region located by each building in the to-be-detected region based on the building probability map corresponding to each remote-sensing image; for each building, determining an existence probability of the building in each remote-sensing image based on the sub-region located by the building and the building probability map corresponding to each remote-sensing image; and determining a change condition of the building based on the existence probability of the building in each remote-sensing image.

EP 3 968 286 A2

## Description

## TECHNICAL FIELD

The disclosure relates to the field of computer technologies, and particularly to the field of artificial intelligence (AI) such as deep learning and computer vision, and especially to a method for detecting a change of a building, an apparatus for detecting a change of a building, an electronic device and a storage medium.

## BACKGROUND

The detection on the change of the building is widely used in various applications such as urban development research, post-disaster reconstruction, discovery of building violations and land use dynamic analysis.

The method for detecting the change of the building in the related art is to perform the building detection on a single remote-sensing image corresponding to each time point to obtain a detection result, and compare a detection result of a remote-sensing image corresponding to a current time point with a detection result of a remote-sensing image corresponding to a previous time point to determine whether the building has changed.

In the above method, the number of pixels occupied by the building in the remote-sensing image is generally small, for example, it may be 1 pixel. Therefore, it is prone to a detection error when the building detection is performed based on the single remote-sensing image, for example, a tree is determined as the building. Furthermore, it leads to the low accuracy of the detection result of the change of the building.

## SUMMARY

The disclosure provides a method for detecting a change of a building, an apparatus for detecting a change of a building, an electronic device, a storage medium and a computer program product.

According to an aspect of embodiments of the disclosure, there is provided a method for detecting a change of a building, including: obtaining a remote-sensing image sequence of a to-be-detected region; obtaining a building probability map corresponding to each remote-sensing image in the remote-sensing image sequence; determining a sub-region located by each building in the to-be-detected region based on the building probability map corresponding to each remote-sensing image; for each building, determining an existence probability of the building in each remote-sensing image based on the sub-region located by the building and the building probability map corresponding to each remote-sensing image; and determining a change condition of the building based on the existence probability of the building in each remote-sensing image.

According to another aspect of embodiments of the disclosure, there is provided an apparatus for detecting a change of a building, including: a first obtaining module, configured to obtain a remote-sensing image sequence of a to-be-detected region; a second obtaining module, configured to obtain a building probability map corresponding to each remote-sensing image in the remote-sensing image sequence; a first determining module, configured to determine a sub-region located by each building in the to-be-detected region based on the building probability map corresponding to each remote-sensing image; a second determining module, configured to determine, for each building, an existence probability of the building in each remote-sensing image based on the sub-region located by the building and the building probability map corresponding to each remote-sensing image; and a third determining module, configured to determine a change condition of the building based on the existence probability of the building in each remote-sensing image.

According to another aspect of embodiments of the disclosure, there is provided an electronic device, including: at least one processor; and a memory communicatively coupled to the at least one processor. The memory is configured to store instructions executable by the at least one processor. When the instructions are executed by the at least one processor, the at least one processor is caused to perform the method as described above.

According to another aspect of embodiments of the disclosure, there is provided a non-transitory computer-readable storage medium storing computer instructions thereon. The computer instructions are configured to cause a computer to perform the method as described above.

According to another aspect of embodiments of the disclosure, there is provided a computer program product including a computer program. When the computer program is executed by a processor, the method as described above.

It should be understood that the content described in this section is not intended to identify the key or important features of the embodiments of the disclosure, nor is it intended to limit the scope of the disclosure. Additional features of the disclosure will be easily understood by the following description.

## BRIEF DESCRIPTION OF THE DRAWINGS

The drawings are used to understand the solution better, and do not constitute a limitation on the disclosure, in which:

FIG. 1 is a flowchart illustrating a method for detecting a change of a building, according to a first embodiment of the disclosure.
FIG. 2 is a flowchart illustrating a method for detecting a change of a building, according to a second embodiment of the disclosure.

FIG. 3 is a flowchart illustrating a method for detecting a change of a building, according to a third embodiment of the disclosure.

FIG. 4 is a flowchart illustrating a method for detecting a change of a building, according to a fourth embodiment of the disclosure.

FIG. 5 is a block diagram illustrating an apparatus for detecting a change of a building, according to a fifth embodiment of the disclosure.

FIG. 6 is a block diagram illustrating an apparatus for detecting a change of a building, according to a sixth embodiment of the disclosure.

FIG. 7 is a block diagram illustrating an electronic device configured to implement a method for detecting a change of a building in some embodiments of the disclosure.

## DETAILED DESCRIPTION

The following describes the exemplary embodiments of the disclosure with reference to the drawings, which includes various details of the embodiments of the disclosure to facilitate understanding and shall be considered merely exemplary. Therefore, those of ordinary skill in the art should recognize that various changes and modifications may be made to the embodiments described herein without departing from the scope of the disclosure. For clarity and conciseness, descriptions of well-known functions and structures are omitted in the following description.

It should be understood that, the method for detecting the change of the building in the related art is to perform the building detection on a single remote-sensing image corresponding to each time point to obtain a detection result, and compare a detection result of a remote-sensing image corresponding to a current time point with a detection result of a remote-sensing image corresponding to a previous time point to determine whether the building has changed.

In the above method, the number of pixels occupied by the building in the remote-sensing image is generally small, for example, it may be 1 pixel. Therefore, it is prone to a detection error when the building detection is performed based on the single remote-sensing image, for example, a tree is determined as the building. Furthermore, it leads to the low accuracy of the detection result of the change of the building.

To improve the accuracy of the result of detecting the change of the building, the disclosure proposes the method for detecting the change of the building. The method obtains a remote-sensing image sequence of a to-be-detected region, obtains a building probability map corresponding to each remote-sensing image in the remote-sensing image sequence, determines a sub-region located by each building in the to-be-detected region based on the building probability map corresponding to each remote-sensing image, determines, for each building, an existence probability of the building in each remote-sensing image based on the sub-region located by the building and the building probability map corresponding to each remote-sensing image; and determines a change condition of the building based on the existence probability of the building in each remote-sensing image. In this way, the change condition of the building is determined by combining the building probability map of each remote-sensing image in the remote-sensing image sequence of the to-be-detected region. Therefore, the accuracy of the result of detecting the change of the building is improved.

A method for detecting a change of a building, an apparatus for detecting a change of a building, an electronic device, a non-transitory computer-readable storage medium and a computer program product of embodiments of the disclosure are described below with reference to the drawings.

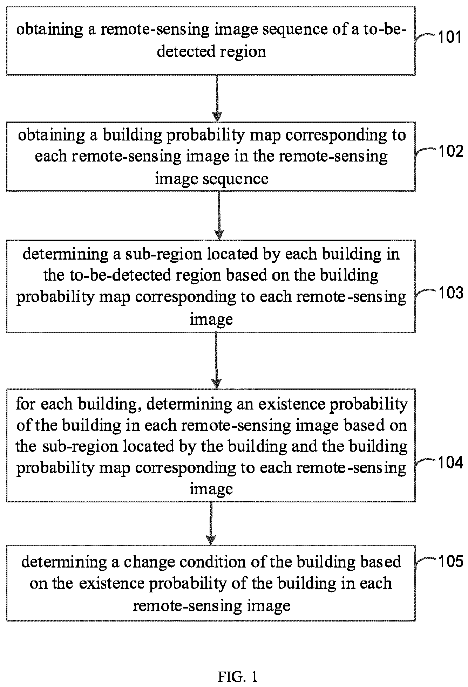

First, with reference to FIG. 1, the method for detecting the change of the building provided in the disclosure will be described in detail.

FIG. 1 is a flowchart illustrating a method for detecting a change of a building, according to a first embodiment of the disclosure. It should be noted that, the execution subject of the method for detecting the change of the building provided in some embodiments of the disclosure is an apparatus for detecting a change of a building. The apparatus for detecting the change of the building may be an electronic device or be configured in the electronic device to improve the accuracy of the result of detecting the change of the building.

The electronic device may be any static or mobile computing device capable of data processing. For example, the electronic device may be the mobile computing device, such as a laptop, a smart phone or a wearable device. The electronic device may also be the static computing device such as a desktop computer. The electronic device may also be a server or other type of computing device. The disclosure does not limit the electronic device.

As shown in FIG. 1, the method may include the following.

In 101, a remote-sensing image sequence of a to-be-detected region is obtained.

The to-be-detected region is a region to be detected for building change conditions, for example, a city, a village, a region surrounded by a range of longitude and latitude.

The remote-sensing image sequence includes multiple remote-sensing images arranged in order of time points. Each remote-sensing image corresponds to a time point.

In 102, a building probability map corresponding to each remote-sensing image in the remote-sensing image sequence is obtained.

The building probability map corresponding to each remote-sensing image includes a first probability that each pixel in the corresponding remote-sensing image belongs to a building.

In an exemplary embodiment, after obtaining the remote-sensing image sequence of the to-be-detected region, for each remote-sensing image in the remote-sensing image sequence, the building probability map corresponding to the remote-sensing image may be obtained.

In 103, a sub-region located by each building in the to-be-detected region is determined based on the building probability map corresponding to each remote-sensing image.

It is understandable that through the analysis on a large number of remote-sensing images, it may be seen that it is rare that the overall renovation of the building has caused a change in its geographic location. That is, after the building is observed for the first time, its geographic location usually does not change. Therefore, in embodiments of the disclosure, it may be considered that the sub-region located by the building in each remote-sensing image in the remote-sensing image sequence is the same. The sub-region located by the building in the remote-sensing image may include each pixel corresponding to the building in the remote-sensing image. For example, the sub-region located by the building in each remote-sensing image in the remote-sensing image sequence includes a pixel in the first row and the second column, a pixel in the first row and the third column, a pixel in the second row and the second column and a pixel in the second row and the third column.

In some embodiments of the disclosure, for each building, it is not necessary to perform multiple calculations based on the building probability map corresponding to each remote-sensing image. Through one calculation, the sub-region located by the building in each remote-sensing image in the remote-sensing image sequence may be obtained.

In addition, through the analysis on the large number of remote-sensing images, it is also known that the sub-regions located by different buildings do not overlap.

In an exemplary embodiment, when determining the sub-region located by each building in the to-be-detected region based on the building probability map corresponding to each remote-sensing image, the sub-region located by each building in the to-be-detected region may be determined based on the first probability that each pixel in the building probability map corresponding to each remote-sensing image belongs to the building and a watershed algorithm.

It should be noted that, in each embodiment of the disclosure, the number of pixels included in each remote-sensing image in the remote-sensing image sequence is the same, and each pixel in different remote-sensing images corresponds to each other one to one.

In 104, for each building, an existence probability of the building in each remote-sensing image is determined based on the sub-region located by the building and the building probability map corresponding to each remote-sensing image.

In an exemplary embodiment, after determining the sub-region located by each building in the to-be-detected region, for each building, the existence probability of the building in the corresponding remote-sensing image may be determined based on the sub-region located by the building and the building probability map corresponding to each remote-sensing image.

Specifically, for each building, when determining the existence probability of the building in a certain remote-sensing image, the first probability of each pixel in the sub-region located by the building belongs to the building may be obtained based on the building probability map corresponding to the remote-sensing image, and the existence probability of the building in the remote-sensing image may be determined based on the first probabilities that all pixels in the sub-region located by the building belong to the building.

The existence probability of the building in each remote-sensing image may be determined in a variety of ways. For example, after the first probability that each pixel in the sub-region located by the building belongs to the building is obtained based on the building probability map corresponding to the remote-sensing image, the largest first probability among the first probabilities may be used as the existence probability of the building in the remote-sensing image or the average value of the first probabilities may be used as the existence probability of the building in the remote-sensing image, which is not limited herein.

In 105, a change condition of the building is determined based on the existence probability of the building in each remote-sensing image.

In an exemplary embodiment, for each remote-sensing image, it is possible to determine whether the building exists in the remote-sensing image based on the existence probability of the building in the remote-sensing image, and the change condition of the building is determined based on the existence condition of the building in the remote-sensing image.

For example, it may be determined whether the building A exists in each remote-sensing image based on the existence probability of the building A in each remote-sensing image. It is assumed that it is determined that the building A does not exist in the first remote-sensing image but exists in the second remote-sensing image, the apparatus for detecting the change of the building may determine that the building A is newly built at the time point corresponding to the second remote-sensing image. It is assumed that it is determined that the building B exists in the first remote-sensing image but does not exist in the second remote-sensing image, the apparatus for detecting the change of the building may determine that at the time point corresponding to the second remote-sensing image, the building B is demolished or damaged.

In some embodiments of the disclosure, the sub-region located by each building in the to-be-detected region is determined based on the building probability map corresponding to each remote-sensing image in the remote-sensing image sequence. It is possible to accurately determine the sub-region located by each building in the to-be-detected region. Furthermore, it is possible to accurately determine the existence probability of each building in each remote-sensing image. Therefore, the accuracy of the result of detecting the change of the building is improved.

The method for detecting the change of the building provided in the embodiments of the disclosure obtains the remote-sensing image sequence of the to-be-detected region, obtains the building probability map corresponding to each remote-sensing image in the remote-sensing image sequence, determines the sub-region located by each building in the to-be-detected region based on the building probability map corresponding to each remote-sensing image, determines, for each building, the existence probability of the building in each remote-sensing image based on the sub-region located by the building and the building probability map corresponding to each remote-sensing image; and determines the change condition of the building based on the existence probability of the building in each remote-sensing image. In this way, the change condition of the building is determined by combining the building probability map of each remote-sensing image in the remote-sensing image sequence of the to-be-detected region. Therefore, the accuracy of the result of detecting the change of the building is improved.

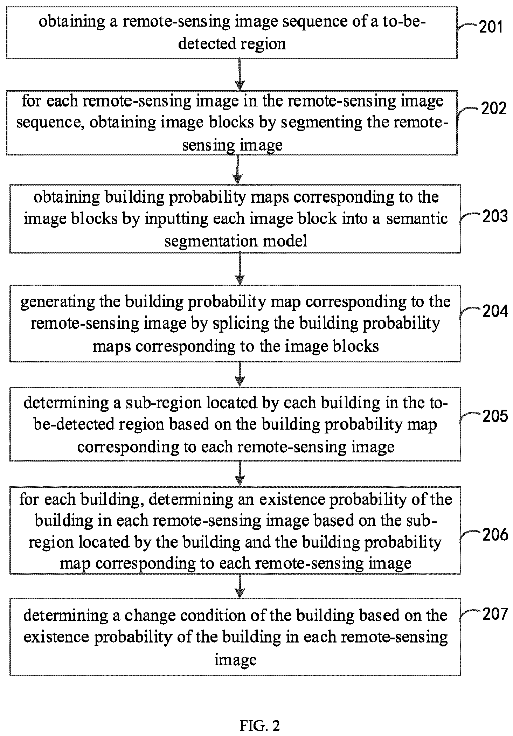

According to the above analysis, in some embodiments of the disclosure, after obtaining the remote-sensing image sequence of the to-be-detected region, the building probability map corresponding to each remote-sensing image in the remote-sensing image sequence may be obtained. In the method for detecting the change of the building, the process of determining the building probability map corresponding to each remote-sensing image in the remote-sensing image sequence may be further explained in the following with reference to FIG. 2.

FIG. 2 is a flowchart illustrating a method for detecting a change of a building, according to a second embodiment of the disclosure. As shown in FIG. 2, the method includes the following.

In 201, a remote-sensing image sequence of a to-be-detected region is obtained.

In 202, for each remote-sensing image in the remote-sensing image sequence, image blocks are obtained by segmenting the remote-sensing image.

In 203, building probability maps corresponding to the image blocks are obtained by inputting each image block into a semantic segmentation model.

In 204, the building probability map corresponding to the remote-sensing image is generated by splicing the building probability maps corresponding to the image blocks.

In an exemplary embodiment, the semantic segmentation model may be pre-trained. The input of the semantic segmentation model is the remote-sensing image and the output is the building probability map with the same size as the remote-sensing image. There is the first probability of each pixel in the remote-sensing image belongs to the building in the building probability map. Through the semantic segmentation model, each remote-sensing image is processed to obtain the building probability map corresponding to the corresponding remote-sensing image.

The semantic segmentation model may be any type of model that may realize semantic segmentation of images in the computer vision field, such as a neural network model, which is not limited in the disclosure.

It should be noted that the size of the remote-sensing image is usually large and the semantic segmentation model may not be able to process the large-sized remote-sensing image. In an exemplary embodiment, for each remote-sensing image in the remote-sensing image sequence, the remote-sensing image may be segmented first to obtain multiple image blocks, and the multiple image blocks are input into the semantic segmentation model respectively to obtain the building probability maps corresponding to the multiple image blocks, and the building probability maps corresponding to the multiple image blocks may be spliced to generate the building probability map corresponding to the remote-sensing image. When each remote-sensing image is segmented, each remote-sensing image may be segmented into corresponding fixed-size image blocks according to the size of the remote-sensing image that may be processed by the semantic segmentation model.

By inputting the image blocks obtained by segmenting each remote-sensing image into the pre-trained semantic segmentation model to obtain the building probability maps corresponding to the image blocks and splicing the building probability maps corresponding to the image blocks to generate the building probability map corresponding to the remote-sensing image, the semantic segmentation model obtained by pre-training is used to accurately obtain the building probability map corresponding to the remote-sensing image.

In an exemplary embodiment, the following manners may be used to train the semantic segmentation model.

An initial semantic segmentation model is obtained.

Training data are obtained. The training data include sample image blocks and label data corresponding to each sample image block. The label data include at least one of: city planning information, map building information and third national land survey data.

The semantic segmentation model is obtained by training the initial semantic segmentation model based on the sample image blocks and the label data corresponding to each sample image block.

The initial semantic segmentation model may be any type of model in the computer vision field that may realize the semantic segmentation of images, such as a neural network model, which is not limited in the disclosure.

It is understandable that in some embodiments of the disclosure, the input of the semantic segmentation model is the image block after segmentation of the remote-sensing image, rather than the remote-sensing image sequence, so that there is no need to obtain the remote-sensing image sequence labeled with the region of the building as the training samples. The remote-sensing image of any resolution at a single time point taken by any remote-sensing satellite in any region may be conveniently used as training data to train and generate the semantic segmentation model in conjunction with the manual label data of remote-sensing images.

In an exemplary embodiment, the remote-sensing image at the corresponding time point may be selected directly from a large number of remote-sensing images obtained by remote-sensing satellites based on at least one of: city planning information, map building information and third national land survey data. The selected remote-sensing image is segmented into fixed-size image blocks as sample image blocks. The label data of each sample image block may be determined based on at least one of: city planning information, map building information and third national land survey data at the corresponding time point. Therefore, the training data are obtained. The label data corresponding to each sample image block corresponds to the time point of the sample image block.

It should be noted that in practical applications, there may be no remote-sensing image in the large number of remote-sensing images obtained by remote-sensing satellites, which may have the same time point as city planning information, map building information and third national land survey data, that is, there is may be no remote-sensing image obtained at the same time as city planning information, map building information and third national land survey data. In some embodiments of the disclosure, the remote-sensing image having the time difference with at least one of city planning information, map building information and third national land survey data within a preset time range, may be used as the remote-sensing image corresponding to the time point of at least one of city planning information, map building information and third national land survey data.

For example, it is assumed that the city planning information is used as the label data corresponding to the sample image block, the preset time range is 7 days, and the time point of the city planning information is January 15. In the remote-sensing images obtained between January 8 and January 22 by remote-sensing satellites, the remote-sensing image at the time point with the smallest time difference from January 15 is selected as the remote-sensing image corresponding to the time point of the city planning information. The selected remote-sensing image may be segmented into multiple image blocks of fixed size as the sample image blocks, and the city planning information at the time point of January 15 may be used as the label data corresponding to the multiple sample image blocks to obtain training data.

Multiple sample image blocks and the corresponding label data of each sample image block may be used to train the initial semantic segmentation model, for example, it may be trained through deep learning. Compared with other machine learning methods, deep learning performs better on large data sets.

When training the initial semantic segmentation model through deep learning, one sample image block of multiple sample image blocks may be used as the input to input the initial semantic segmentation model, and the building probability map corresponding to the sample image block is obtained. The parameters of the initial semantic segmentation model may be adjusted by combining the sample image block and the label data corresponding to the sample image block to obtain the adjusted semantic segmentation model. Then another sample image block of the multiple sample image blocks may be used as the input to input the adjusted semantic segmentation model, and the building probability map corresponding to the sample image block is obtained. The parameters of the adjusted semantic segmentation model may be adjusted by combining the sample image block and the label data corresponding to the sample image block to obtain the further adjusted semantic segmentation model. Thus, the initial semantic segmentation model is iteratively trained by continuously adjusting the model parameters of the initial semantic segmentation model until the accuracy of the building probability map output by the semantic segmentation model satisfies the preset threshold. The training ends, and the trained semantic segmentation model is obtained.

When training the semantic segmentation model, there is no need to spend a lot of manpower to obtain the label data of the remote-sensing image sequence, any remote-sensing image of any resolution at a single time point taken by any remote-sensing satellite in any region by matching at least one of city planning information, map building information and third national land survey data as the label data, may be used to obtain the accurate training data. The semantic segmentation model is generated by training, thereby saving the labor cost required to obtain label data and improving the iterative speed of the semantic segmentation model. Also, the initial semantic segmentation model is trained through this training data, which improves the generalization ability of the trained semantic segmentation model.

In 205, a sub-region located by each building in the to-be-detected region is determined based on the building probability map corresponding to each remote-sensing image.

In 206, for each building, an existence probability of the building in each remote-sensing image is determined based on the sub-region located by the building and the building probability map corresponding to each remote-sensing image.

In 207, a change condition of the building is determined based on the existence probability of the building in each remote-sensing image.

For the specific implementation process and principles of 205-207, reference may be made to the description of the foregoing embodiments, which will not be repeated herein.

The method for detecting the change of the building provided in the embodiments of the disclosure obtains the remote-sensing image sequence of the to-be-detected region; obtains, for each remote-sensing image in the remote-sensing image sequence, the image blocks by segmenting the remote-sensing image; obtains the building probability maps corresponding to the image blocks by inputting each image block into the semantic segmentation model; generates the building probability map corresponding to the remote-sensing image by splicing the building probability maps corresponding to the image blocks; determines the sub-region located by each building in the to-be-detected region based on the building probability map corresponding to each remote-sensing image; determines, for each building, the existence probability of the building in each remote-sensing image based on the sub-region located by the building and the building probability map corresponding to each remote-sensing image; and determines the change condition of the building based on the existence probability of the building in each remote-sensing image. In this way, the semantic segmentation model is used to obtain the building probability map corresponding to each remote-sensing image in the remote-sensing image sequence, and the change condition of the building is determined by combining the building probability map of each remote-sensing image in the remote-sensing image sequence of the to-be-detected region. Therefore, the accuracy of the result of detecting the change of the building is improved.

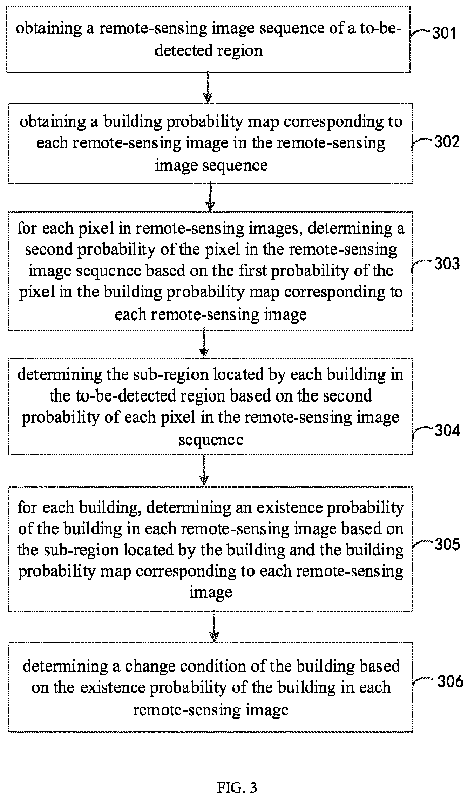

The method for detecting the change of the building provided in the disclosure will be further described below with reference to FIG. 3.

FIG. 3 is a flowchart illustrating a method for detecting a change of a building, according to a third embodiment of the disclosure. As shown in FIG. 3, the method includes the following.

In 301, a remote-sensing image sequence of a to-be-detected region is obtained.

In 302, a building probability map corresponding to each remote-sensing image in the remote-sensing image sequence is obtained.

The building probability map corresponding to each remote-sensing image includes a first probability that each pixel in the corresponding remote-sensing image belongs to a building.

For the specific implementation process and principles of 301-302, reference may be made to the description of the foregoing embodiments, which will not be repeated herein.

In 303, for each pixel in remote-sensing images, a second probability of the pixel in the remote-sensing image sequence is determined based on the first probability of the pixel in the building probability map corresponding to each remote-sensing image.

In an exemplary embodiment, for each pixel in the remote-sensing images, the second probability of the pixel in the remote-sensing image sequence may be obtained by: obtaining first remote-sensing images from the remote-sensing image sequence, in which the first remote-sensing image is a remote-sensing image with the first probability of the pixel greater than a first probability threshold; and obtaining the second probability of the pixel in the remote-sensing image sequence by performing a weighted average on the first probability of the pixel in each first remote-sensing image.

The first probability threshold may be set arbitrarily as needed, for example, it may be set to 0.1.

The second probability of the pixel in the remote-sensing image sequence may be obtained by the following formula (1).

$$S_{ij} = \frac{\sum_t P_{ij}^t \mathbb{I}(P_{ij}^t \geq \alpha)}{max\left(\sum_t \mathbb{I}(P_{ij}^t \geq \alpha), \varepsilon\right)} \quad (1)$$

where $S_{ij}$ is the second probability of the pixel in the ith row and the jth column in the remote-sensing image sequence; $\alpha$ is the first probability threshold; $P_{ij}^t$ is the first probability that the pixel in the ith row and the jth column in the tth remote-sensing image belongs to the building; $\sum_t P_{ij}^t \mathbb{I}\left(P_{ij}^t \geq \alpha\right)$ is the sum of the first probabilities of the pixel in the ith row and the jth column in the first remote-sensing images; $\sum_t \mathbb{I}\left(P_{ij}^t \geq \alpha\right)$ is the number of the first remote-sensing images; $max\left(\sum_t \mathbb{I}\left(P_{ij}^t \geq \alpha\right), \varepsilon\right)$ represents the maximum value of $\sum_t \mathbb{I}\left(P_{ij}^t \geq \alpha\right)$ and $\varepsilon$; and $\varepsilon$ is a very small number, such as 0.00001, to avoid the denominator of formula (1) from being 0.

For example, for the pixel in the first row and the first column of the remote-sensing images, the first probability of that pixel in the building probability map corresponding to each remote-sensing image may be compared with the first probability threshold, and the remote-sensing image with the first probability greater than the first probability threshold is determined as the first remote-sensing image. The first probability of the pixel in the first row and the first column in each first remote-sensing image is weighted and averaged to obtain the second probability of the pixel in the first row and the first column of the remote-sensing image sequence. Through a similar method, the second probability of each pixel in the remote-sensing image sequence may be obtained.

It is understandable that, in practical applications, the first probability that each pixel in the building probability map corresponding to each remote-sensing image belongs to the building may have an error, which is usually not 0 or 1. Then, in some embodiments of the disclosure, by pre-setting the first probability threshold, the first probability of the pixel in the building probability map corresponding to each remote-sensing image may be filtered based on the first probability threshold. Therefore, for each pixel in the remote-sensing images, the second probability of the pixel in the remote-sensing image sequence is obtained based only on the larger first probability that the pixel in each remote-sensing image belongs to the building, thereby improving the accuracy of obtaining the second probability of the pixel in the remote-sensing image sequence.

In 304, the sub-region located by each building in the to-be-detected region is determined based on the second probability of each pixel in the remote-sensing image sequence.

In an exemplary embodiment, the sub-region located by each building in the to-be-detected region is determined by: obtaining a first pixel with a maximum second probability as a center pixel of each building based on the second probability of each pixel in the remote-sensing image sequence; determining pixel boundaries of each building by combining the first pixel and a watershed algorithm; and determining the sub-region located by each building in the to-be-detected region based on the pixel boundaries and the center pixel.

It is understandable that the pixel with the local maximum second probability in the remote-sensing image sequence may be considered as the center pixel of each building. Then, in some embodiments of the disclosure, it may obtain the first pixel with the corresponding maximum second probability as the center pixel of each building based on the second probability of each pixel in the remote-sensing image sequence.

Or, in order to improve the accuracy of the determined center pixel of the building, a third probability threshold may also be set in advance. The third probability threshold may be set arbitrarily based on needs, for example, set to 0.4. The first pixel with the second probability greater than the third probability threshold and having the maximum value may be obtained based on the second probability of each pixel in the remote-sensing image sequence, and used as the center pixel of each building.

Pixel boundaries of each building are determined by combining the first pixel and a watershed algorithm after the center pixel of each building.

Specifically, an all-zero matrix with the same number of rows and columns as the number of rows and columns of the pixels in the remote-sensing image sequence may be set based on the number of rows and columns of the pixels in the remote-sensing image sequence. The element corresponding to the same row and the same column as the first pixel in the all-zero matrix is set to 1, to obtain another matrix, which is assumed to be Mi. For example, it is assumed that the remote-sensing image sequence includes 6 rows and 6 columns of pixels, and the first pixels are the pixel in the second row and the third column and the pixel in the fourth row and the fifth column of the remote-sensing image sequence. A matrix of all 0s with 6 rows and 6 columns may be set. The elements in the second row and the third column and in the fourth row and the fifth column may be set to 1 to obtain the matrix Mi.

Furthermore, a fourth probability threshold may be set in advance, where the fourth probability threshold may be arbitrarily set based on needs, for example, set to 0.6, so that the second pixel with the second probability greater than the fourth probability threshold may be obtained based on the second probability of each pixel in the remote-sensing image sequence. The element corresponding to the same row and the same column as the second pixel in the matrix $M_1$ is set to 1 to obtain another matrix $M_2$.

Furthermore, $M_2$ may be used as a seed, the watershed algorithm is used to obtain the pixel boundaries of each building within the range where the element of matrix Mi is 1. The sub-region located by each building in the to-be-detected region is determined based on the pixel boundaries and the center pixel.

It should be noted that since the watershed algorithm is an image segmentation algorithm based on the analysis of geographic morphology, it imitates the water injection process of geographic structures (such as ravines, basins) to classify different objects. When the watershed algorithm is used to obtain the sub-region located by the building, the water injection direction is opposite to the water injection direction of ravines, basins, etc. Therefore, when using the watershed algorithm to obtain the sub-region located by the building, the second probability of each pixel in the remote-sensing image sequence needs to be negative, and the negative probability values are calculated to obtain the sub-region located by the building.

It is understandable that, in some embodiments of the disclosure, for each pixel in the remote-sensing images, the second probability of the pixel in the remote-sensing image sequence is determined based on the first probability of the pixel in the building probability map corresponding to each remote-sensing image. The sub-region located by each building in the to-be-detected region is determined based on the second probability of each pixel in the remote-sensing image sequence. Because the building probability map corresponding to each remote-sensing image is combined to determine the sub-region located by each building in the to-be-detected region, the accuracy of the determined sub-region located by each building in the to-be-detected region is improved. When determining the sub-region located by each building in the to-be-detected region based on the second probability of each pixel in the remote-sensing image sequence, the first pixel with the maximum second probability may be obtained based on the second probability of each pixel in the remote-sensing image sequence as the center pixel of each building. The pixel boundaries of each building may be determined in combination with the first pixel and the watershed algorithm. The sub-region located by each building in the to-be-detected region may be determined based on the first pixel and the pixel boundaries. The accuracy of the determined sub-region located by each building in the to-be-detected region may be improved.

In 305, for each building, an existence probability of the building in each remote-sensing image is determined based on the sub-region located by the building and the building probability map corresponding to each remote-sensing image.

In an exemplary embodiment, for each building, when determining the existence probability of the building in each remote-sensing image, for each remote-sensing image, the first probability that each pixel in the sub-region located by the building belongs to the building is determined based on the building probability map corresponding to the remote-sensing image, and the existence probability of the building in the remote-sensing image is obtained by performing a weighted average on the first probability that each pixel in the sub-region located by the building belongs to the building.

In an exemplary embodiment, taking the weight of each first probability as 1, for example, the following formula (2) may be used to determine the existence probability of each building in each remote-sensing image.

$$T_l^t = \frac{1}{|\{(i,j) \in \mathcal{G}_l\}|} \sum_{(i,j) \, \in \, \mathcal{G}_l} P_{ij}^t \qquad (2)$$

where, $T_l^t$ is the existence probability of the 1th building in the t$^{th}$ remote-sensing image; $\mathcal{G}_l$ is all pixels included in the sub-region located by the 1th building; and $P_{ij}^t$ is the first probability that the pixel in the i$^{th}$ row and the j$^{th}$ column in the t$^{th}$ remote-sensing image belongs to the building.

For example, it is assumed that the sub-region located by the building A includes 4 pixels in the first row and the fourth column, in the first row and the fifth column, in the second row and the fourth column and in the second row and the fifth column, in each remote-sensing image. When determining the existence probability of the building A in the first remote-sensing image corresponding to the first time point, the first probabilities that 4 pixels in the first row and the fourth column, in the first row and the fifth column, in the second row and the fourth column and in the second row and the fifth column, of the building A, belongs to the building, may be obtained based on the building probability map corresponding to the first remote-sensing image. The 4 pixels may be performed with the weighted average to obtain the existence probability of the building A in the first remote-sensing image.

When determining the existence probability of the building A in the second remote-sensing image corresponding to the second time point, the first probabilities that 4 pixels in the first row and the fourth column, in the first row and the fifth column, in the second row and the fourth column and in the second row and the fifth column, of the building A, belongs to the building, may be obtained based on the building probability map corresponding to the second remote-sensing image. The 4 pixels may be performed with the weighted average to obtain the existence probability of the building A in the second remote-sensing image. In a similar way, the existence probability of the building A in each remote-sensing image may be obtained.

In 306, a change condition of the building is determined based on the existence probability of the building in each remote-sensing image.

In an exemplary embodiment, for each building, after determining the existence probability of each building in each remote-sensing image, for each remote-sensing image, it is possible to determine whether the building exists in the remote-sensing image based on the existence probability of the building in the remote-sensing image, and the change condition of the building is determined based on the existence condition of the building in the remote-sensing image.

In an exemplary embodiment, the second probability threshold may be set in advance, where the second probability threshold may be arbitrarily set as required, so as to determine whether the building exists in the remote-sensing image based on the relationship between the existence probability of the building in each remote-sensing image and the second probability threshold.

That is, in an exemplary embodiment, 306 may be implemented by: for each remote-sensing image, determining that the building exists in the remote-sensing image in response to the existence probability of the building in the remote-sensing image being greater than or equal to a second probability threshold; determining that the building does not exist in the remote-sensing image in response to the existence probability of the building in the remote-sensing image being less than the second probability threshold; and determining the change condition of the building based on an existence of the building in each remote-sensing image.

For example, it is assumed that the second probability threshold is 0.8, the existence probability of the building A in the first remote-sensing image is 0.9, the existence probability of the building A in the second remote-sensing image is 0.85, and the existence probability of the building A in the third remote-sensing image is 0.4. It may be determined that the building A exists in the first and second remote-sensing images, but does not exist in the third remote-sensing image based on the existence probabilities of the building A in these three remote-sensing images and the second probability threshold. Based on the existence condition of the building A in the three remote-sensing images, it may be determined that the building A was demolished or damaged at the time point corresponding to the third remote-sensing image.

It is assumed that the existence probability of the building B in the first remote-sensing image is 0.3, the existence probability of the building B in the second remote-sensing image is 0.2, and the existence probability of the building B in the third remote-sensing image is 0.9. It may be determined that the building B does not exist in the first and second remote-sensing images, but exists in the third remote-sensing image based on the existence probabilities of the building B in these three remote-sensing images and the second probability threshold. Based on the existence condition of the building B in the three remote-sensing images, it may be determined that the building B is newly built at the time point corresponding to the third remote-sensing image.

For each building, the first probability that each pixel in the sub-region located by the building belongs to the building is determined based on the building probability map corresponding to the remote-sensing image, and the existence probability of the building in the remote-sensing image is determined based on the first probabilities that all pixels in the sub-region located by the building belongs to the building. It may accurately determine the existence probability of the building in each remote-sensing image. It may be determined whether the building exists in each remote-sensing image based on the existence probability of the building in each remote-sensing image and the preset second probability threshold. The change condition of the building may be determined based on the existence of the building in each remote-sensing image. The accuracy of the result of detecting the change of the building may be improved.

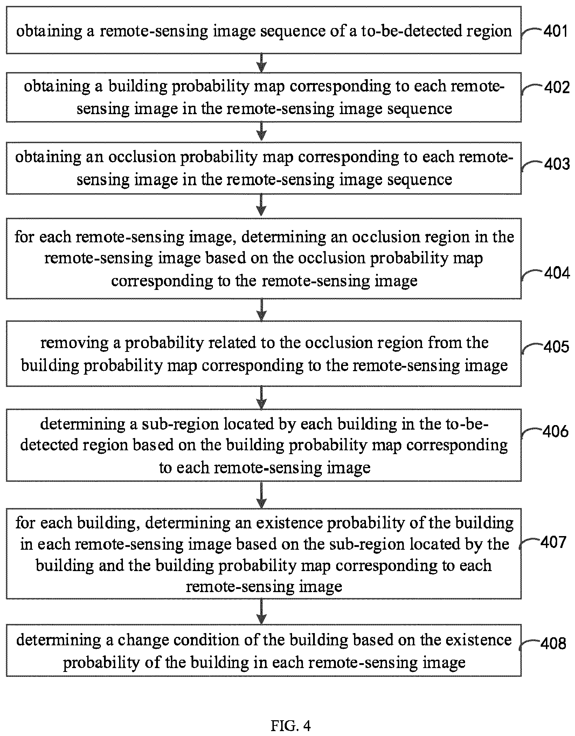

From the above analysis, it may be seen that the sub-region located by each building in the to-be-detected region may be determined based on the building probability map corresponding to each remote-sensing image in the remote-sensing image sequence; for each building, the existence probability of the building in each remote-sensing image is determined based on the sub-region located by the building and the building probability map corresponding to each remote-sensing image; and the change condition of the building is determined based on the existence probability of the building in each remote-sensing image. In a possible implementation situation, the remote-sensing image may be occluded. For example, a certain building is blocked by clouds or haze, resulting in that the building does not appear in the remote-sensing image. In view of this situation, the method for detecting the change of the building provided in the disclosure will be further described below in conjunction with FIG. 4.

FIG. 4 is a flowchart illustrating a method for detecting a change of a building, according to a fourth embodiment of the disclosure. As shown in FIG. 4, the method may include the following.

In 401, a remote-sensing image sequence of a to-be-detected region is obtained.

In 402, a building probability map corresponding to each remote-sensing image in the remote-sensing image sequence is obtained.

For the specific implementation process and principles of 401-402, reference may be made to the description of the foregoing embodiments, which will not be repeated herein.

In 403, an occlusion probability map corresponding to each remote-sensing image in the remote-sensing image sequence is obtained.

In an exemplary embodiment, a semantic segmentation model used to obtain the occlusion probability map corresponding to the remote-sensing image may be pre-trained, which is referred to herein as the first semantic segmentation model. The input of the first semantic segmentation model is the remote-sensing image and the output is the occlusion probability map with the same size as the remote-sensing image. The occlusion probability map includes: the probability of each pixel in the corresponding remote-sensing image being occluded. Therefore, each remote-sensing image is processed through the first semantic segmentation model to obtain the occlusion probability map corresponding to the corresponding remote-sensing image.

The first semantic segmentation model may be any type of model in the computer vision field that may realize semantic segmentation of images, such as a neural network model, which is not limited in the disclosure.

It should be noted that since the size of remote-sensing images is usually large and the first semantic segmentation model may not be able to process larger size remote-sensing images, in an exemplary embodiment, for each remote-sensing image in the remote-sensing image sequence, the remote-sensing image may be segmented to obtain multiple image blocks, the multiple image blocks are respectively input into the first semantic segmentation model to obtain the occlusion probability maps corresponding to the multiple image blocks, and the occlusion probability maps corresponding to the multiple image blocks are spliced to generate the occlusion probability map corresponding to the remote-sensing image. When each remote-sensing image is segmented, each remote-sensing image may be segmented into fixed-size image blocks based on the size of the remote-sensing image that may be processed by the first semantic segmentation model.

In an exemplary embodiment, the following manner may be used to train the first semantic segmentation model.

An initial first semantic segmentation model is obtained.

Training data are obtained, in which the training data include multiple sample image blocks and label data corresponding to each sample image block.

The initial first semantic segmentation model is trained based on the multiple sample image blocks and the label data corresponding to each sample image block to obtain the trained first semantic segmentation model.

The initial first semantic segmentation model may be any type of model that may realize semantic segmentation of images in the computer vision field, such as a neural network model, which is not limited in the disclosure.

In an exemplary embodiment, the occlusion regions in multiple remote-sensing images may be manually labeled, and each of the labeled remote-sensing images may be segmented into fixed-size image blocks to obtain multiple sample image blocks and the label data corresponding to each sample image block. The initial first semantic segmentation model may be trained based on the multiple sample image blocks and the label data corresponding to each sample image block to obtain the trained first semantic segmentation model.

When training the initial first semantic segmentation model using multiple sample image blocks and the label data of each sample image block, it may be trained through deep learning, for example. Compared to other machine learning methods, the deep learning performs better on large data sets.

When training the initial first semantic segmentation model through deep learning, one sample image block of the multiple sample image blocks may be used as the input to input into the initial first semantic segmentation model to obtain the occlusion probability map corresponding to the sample image block. The label data corresponding to the sample image block are combined to adjust the model parameters of the initial first semantic segmentation model to obtain the adjusted first semantic segmentation model. Then another sample image block of the multiple sample image blocks is taken as the input to input into the adjusted first semantic segmentation model to obtain the occlusion probability map corresponding to the sample image block. The label data corresponding to the sample image block are combined to adjust the model parameters of the adjusted first semantic segmentation model to obtain a further adjusted first semantic segmentation model. Therefore, the model parameters of the initial first semantic segmentation model are continuously adjusted to perform the iterative training on the initial first semantic segmentation model, until the accuracy of the occlusion probability map output by the first semantic segmentation model satisfies the preset threshold, the training ends, and the trained first semantic segmentation model is obtained.

In 404, for each remote-sensing image, an occlusion region in the remote-sensing image is determined based on the occlusion probability map corresponding to the remote-sensing image.

The occlusion region may include all pixels that are occluded in the remote-sensing image.

In an exemplary embodiment, a fifth probability threshold may be set in advance, where the fifth probability threshold may be set arbitrarily as needed, so that after obtaining the occlusion probability map corresponding to each remote-sensing image, for each remote-sensing image, the pixel with the occlusion probability greater than the fifth probability threshold in all pixels may be determined as the pixel with the occlusion to determine the occlusion region in the remote-sensing image.

In 405, a probability related to the occlusion region is removed from the building probability map corresponding to the remote-sensing image to obtain the building probability map corresponding to each remote-sensing image after processing.

In 406, a sub-region located by each building in the to-be-detected region is determined based on the building probability map corresponding to each remote-sensing image after processing.

In an exemplary embodiment, when detecting the change of the building, in order to avoid detection errors in determining that the building is demolished or damaged due to the building being blocked, the probability related to the occlusion region may be deleted from the building probability map corresponding to the remote-sensing image, to obtain the building probability map corresponding to each remote-sensing image after processing. Then, the building probability map corresponding to each remote-sensing image after processing is used to determine the sub-region located by each building in the to-be-detected region.

For example, if the pixels in the first row and the third columns and in the first row and fourth column are determined to be the occlusion region of the remote-sensing image based on the occlusion probability map corresponding to the remote-sensing image, the probabilities that the pixels in the first row and the third columns and in the first row and fourth column belong to the building are removed from the building probability map corresponding to the remote-sensing image to obtain the processed building probability map corresponding to the remote-sensing image. When determining the sub-region located by each building in the to-be-detected region, the processed building probability map corresponding to the remote-sensing image may be used to calculate, instead of using the pixels in the first row and the third columns and in the first row and fourth column belong to the building in the building probability map of the remote-sensing image. The accuracy of the sub-region located by each building in the to-be-detected region may be improved.

In 407, for each building, an existence probability of the building in each remote-sensing image is determined based on the sub-region located by the building and the building probability map corresponding to each remote-sensing image after processing.

In an exemplary embodiment, for each building, when determining the existence probability of the building in each remote-sensing image, the processed building probability map corresponding to the remote-sensing image may also be used for calculation, thereby improve the accuracy of the existence probability of the building in each remote-sensing images.

In 408, a change condition of the building is determined based on the existence probability of the building in each remote-sensing image.

Combining the building probability map and the occlusion probability map of each remote-sensing image in the remote-sensing image sequence, the sub-region located by each building in the to-be-detected region and the existence probability of the building in each remote-sensing image are determined, avoiding the errors in the sub-region located by each building in the to-be-detected region and the existence probability of the building in each remote-sensing image, caused by the occlusion. The accuracy of the determined sub-region located by each building in the to-be-detected region and existence probability of the building in each remote-sensing image may be improved. The accuracy of the result of detecting the change of the building may be further improved.

The method for detecting the change of the building provided in the embodiments of the disclosure obtains the remote-sensing image sequence of the to-be-detected region; obtains the building probability map corresponding to each remote-sensing image in the remote-sensing image sequence; obtains the occlusion probability corresponding to each remote-sensing image in the remote-sensing image sequence; for each remote-sensing image, determines the occlusion region in the remote-sensing image based on the occlusion probability map corresponding to the remote-sensing image, and then removes the probability related to the occlusion region from the building probability map corresponding to the remote-sensing image to obtain the processed building probability map corresponding to each remote-sensing image; determines the sub-region located by each building in the to-be-detected region based on the processed building probability map corresponding to each remote-sensing image; and determines the change condition of the building based on the existence probability of the building in each remote-sensing image. In this way, the change condition of the building is determined by combining the building probability map and the occlusion probability map of each remote-sensing image in the remote-sensing image sequence of the to-be-detected region. Therefore, the accuracy of the result of detecting the change of the building is improved.

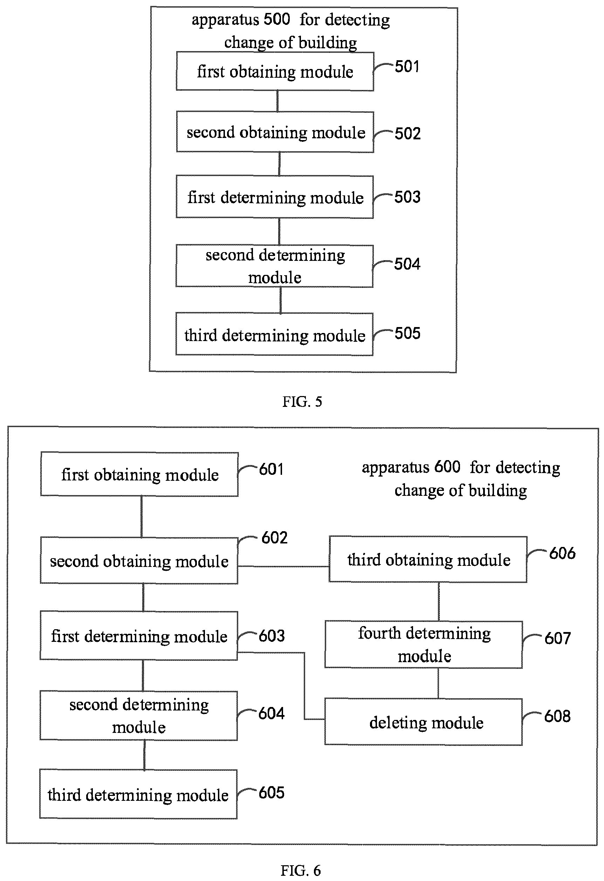

The following describes an apparatus for detecting a change of a building provided in the disclosure with reference to FIG. 5.

FIG. 5 is a block diagram illustrating an apparatus for detecting a change of a building, according to a fifth embodiment of the disclosure.

As shown in FIG. 5, the apparatus 500 includes a first obtaining module 501, a second obtaining module 502, a first determining module 503, a second determining module 504 and a third determining module 505.

The first obtaining module 501 is configured to obtain a remote-sensing image sequence of a to-be-detected region.

The second obtaining module 502 is configured to obtain a building probability map corresponding to each remote-sensing image in the remote-sensing image sequence.

The first determining module 503 is configured to determine a sub-region located by each building in the to-be-detected region based on the building probability map corresponding to each remote-sensing image.

The second determining module 504 is configured to determine, for each building, an existence probability of the building in each remote-sensing image based on the sub-region located by the building and the building probability map corresponding to each remote-sensing image.

The third determining module 505 is configured to determine a change condition of the building based on the existence probability of the building in each remote-sensing image.

It should be noted that the apparatus for detecting the change of the building provided in some embodiments of the disclosure may execute the method for detecting the change of the building described in the foregoing embodiments. The apparatus for detecting the change of the building may be an electronic device or be configured in the electronic device to improve the accuracy of the result of detecting the change of the building.

The electronic device may be any static or mobile computing device capable of data processing. For example, the electronic device may be the mobile computing device, such as a laptop, a smart phone or a wearable device. The electronic device may also be the static computing device such as a desktop computer. The electronic device may also be a server or other type of computing device. The disclosure does not limit the electronic device.

It should be noted that the foregoing description of the embodiments of the method for detecting the change of the building is also applicable to the apparatus for detecting the change of the building, which will not be repeated herein.

The apparatus for detecting the change of the building provided in the embodiments of the disclosure obtains the remote-sensing image sequence of the to-be-detected region, obtains the building probability map corresponding to each remote-sensing image in the remote-sensing image sequence, determines the sub-region located by each building in the to-be-detected region based on the building probability map corresponding to each remote-sensing image, determines, for each building, the existence probability of the building in each remote-sensing image based on the sub-region located by the building and the building probability map corresponding to each remote-sensing image; and determines the change condition of the building based on the existence probability of the building in each remote-sensing image.

In this way, the change condition of the building is determined by combining the building probability map of each remote-sensing image in the remote-sensing image sequence of the to-be-detected region. Therefore, the accuracy of the result of detecting the change of the building is improved.

The apparatus for detecting the change of the building provided in the disclosure will be described below with reference to FIG. 6.

FIG. 6 is a block diagram illustrating an apparatus for detecting a change of a building, according to a sixth embodiment of the disclosure.

As shown in FIG. 6, the apparatus 600 includes a first obtaining module 601, a second obtaining module 602, a first determining module 603, a second determining module 604 and a third determining module 605. The first obtaining module 601, the second obtaining module 602, the first determining module 603, the second determining module 604 and the third determining module 605 in FIG. 6 have the same functions and structures as the first obtaining module 501, the second obtaining module 502, the first determining module 503, the second determining module 504 and the third determining module 505 in FIG. 5.

In an exemplary embodiment, the apparatus 600 further includes a third obtaining module 606, a fourth determining module 607 and a deleting module 608.

The third obtaining module 606 is configured to obtain an occlusion probability map corresponding to each remote-sensing image in the remote-sensing image sequence.

The fourth determining module 607 is configured to, for each remote-sensing image, determine an occlusion region in the remote-sensing image based on the occlusion probability map corresponding to the remote-sensing image.

The deleting module 608 is configured to remove a probability related to the occlusion region from the building probability map corresponding to the remote-sensing image.

In an exemplary embodiment, the second obtaining module 602 includes: a segmenting unit, configured to, for each remote-sensing image in the remote-sensing image sequence, obtain image blocks by segmenting the remote-sensing image; a first obtaining unit, configured to obtain building probability maps corresponding to the image blocks by inputting each image block into a semantic segmentation model; and a splicing unit, configured to generate the building probability map corresponding to the remote-sensing image by splicing the building probability maps corresponding to the image blocks.

In an exemplary embodiment, the second obtaining module 602 further includes: a second obtaining unit, configured to obtain an initial semantic segmentation model; a third obtaining unit, configured to obtain training data, in which the training data include sample image blocks and label data corresponding to each sample image block, the label data include at least one of: city planning information, map building information and third national land survey data; and a training unit, configured to obtain the semantic segmentation model by training the initial semantic segmentation model based on the sample image blocks and the label data corresponding to each sample image block.

In an exemplary embodiment, the building probability map includes a first probability that each pixel in the corresponding remote-sensing image belongs to a building; and the first determining module includes: a first determining unit, configured to, for each pixel in remote-sensing images, determine a second probability of the pixel in the remote-sensing image sequence based on the first probability of the pixel in the building probability map corresponding to each remote-sensing image; and a second determining unit, configured to determine the sub-region located by each building in the to-be-detected region based on the second probability of each pixel in the remote-sensing image sequence.

In an exemplary embodiment, the first determining unit includes: an obtaining subunit, configured to obtain first remote-sensing images from the remote-sensing image sequence, in which the first remote-sensing image is a remote-sensing image with the first probability of the pixel greater than a first probability threshold; and a processing subunit, configured to obtain the second probability of the pixel in the remote-sensing image sequence by performing a weighted average on the first probability of the pixel in each first remote-sensing image.

In an exemplary embodiment, the second determining unit includes: a first determining subunit, configured to obtain a first pixel with a maximum second probability as a center pixel of each building based on the second probability of each pixel in the remote-sensing image sequence; a second determining subunit, configured to determine pixel boundaries of each building by combining the first pixel and a watershed algorithm; and a third determining subunit, configured to determine the sub-region located by each building in the to-be-detected region based on the pixel boundaries and the center pixel.

In an exemplary embodiment, the building probability map includes a first probability that each pixel in the corresponding remote-sensing image belongs to a building; and the second determining module 604 includes: a third determining unit, configured to, for each remote-sensing image, determine the first probability that each pixel in the sub-region located by the building belongs to the building based on the building probability map corresponding to the remote-sensing image; and a processing unit, configured to obtain the existence probability of the building in the remote-sensing image by performing a weighted average on the first probability that each pixel in the sub-region located by the building belongs to the building.

In an exemplary embodiment, the third determining module 605 includes: a fourth determining unit, configured to, for each remote-sensing image, determine that the building exists in the remote-sensing image in response to the existence probability of the building in the remote-sensing image being greater than or equal to a second probability threshold; a fifth determining unit, configured to determine that the building does not exist in the remote-sensing image in response to the existence probability of the building in the remote-sensing image being less than the second probability threshold; and a sixth determining unit, configured to determine the change condition of the building based on an existence of the building in each remote-sensing image.

It should be noted that the foregoing description of the embodiments of the method for detecting the change of the building is also applicable to the apparatus for detecting the change of the building, which will not be repeated herein.

The apparatus for detecting the change of the building provided in the embodiments of the disclosure obtains the remote-sensing image sequence of the to-be-detected region, obtains the building probability map corresponding to each remote-sensing image in the remote-sensing image sequence, determines the sub-region located by each building in the to-be-detected region based on the building probability map corresponding to each remote-sensing image, determines, for each building, the existence probability of the building in each remote-sensing image based on the sub-region located by the building and the building probability map corresponding to each remote-sensing image; and determines the change condition of the building based on the existence probability of the building in each remote-sensing image. In this way, the change condition of the building is determined by combining the building probability map of each remote-sensing image in the remote-sensing image sequence of the to-be-detected region. Therefore, the accuracy of the result of detecting the change of the building is improved.

In some embodiments of the disclosure, an electronic device, a readable storage medium, and a computer program product are further provided.

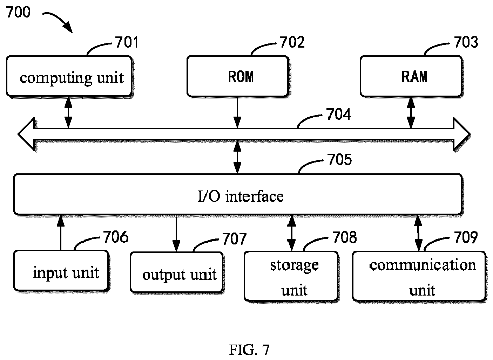

FIG. 7 is a block diagram illustrating an example electronic device 700 configured to implement some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown herein, their connections and relations, and their functions are merely examples, and are not intended to limit the implementation of the disclosure described and/or required herein.

As illustrated in FIG. 7, the device 700 includes a computing unit 701. The computing unit 701 may execute various appropriate actions and processes according to computer program instructions stored in a read only memory (ROM) 702 or computer program instructions loaded to a random access memory (RAM) 703 from a storage unit 708. The RAM 703 may also store various programs and date required by the device 700. The computing unit 701, the ROM 702, and the RAM 703 may be connected to each other via a bus 704. An input/output (I/O) interface 705 is also connected to the bus 704.

A plurality of components in the device 700 are connected to the I/O interface 705, including: an input unit 706 such as a keyboard, a mouse; an output unit 707 such as various types of displays, loudspeakers; a storage unit 708 such as a magnetic disk, an optical disk; and a communication unit 709, such as a network card, a modem, a wireless communication transceiver. The communication unit 709 allows the device 700 to exchange information/data with other devices over a computer network such as the Internet and/or various telecommunication networks.

The computing unit 701 may be various general-purpose and/or special-purpose processing components having processing and computing capabilities. Some examples of the computing unit 701 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 701 executes the above-mentioned methods and processes, such as the method. For example, in some implementations, the method may be implemented as computer software programs. The computer software programs are tangibly contained a machine readable medium, such as the storage unit 708. In some embodiments, a part or all of the computer programs may be loaded and/or installed on the device 700 through the ROM 702 and/or the communication unit 709. When the computer programs are loaded to the RAM 703 and are executed by the computing unit 701, one or more blocks of the method described above may be executed. Alternatively, in other embodiments, the computing unit 701 may be configured to execute the method in other appropriate ways (such as, by means of hardware).

The functions described herein may be executed at least partially by one or more hardware logic components. For example, without not limitation, exemplary types of hardware logic components that may be used include: a field programmable gate array (FPGA), an application specific integrated circuit (ASIC), an application specific standard product (ASSP), a system on chip (SOC), a complex programmable logic device (CPLD) and the like. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of the disclosure may be written in any combination of one or more programming languages. These program codes may be provided to a processor or a controller of a general purpose computer, a special purpose computer or other programmable data processing device, such that the functions/operations specified in the flowcharts and/or the block diagrams are implemented when these program codes are executed by the processor or the controller. These program codes may execute entirely on a machine, partly on a machine, partially on the machine as a stand-alone software package and partially on a remote machine, or entirely on a remote machine or entirely on a server.

In the context of the disclosure, the machine-readable medium may be a tangible medium that may contain or store a program to be used by or in connection with an instruction execution system, apparatus, or device. The machine-readable medium may be a machine-readable signal medium or a machine-readable storage medium. The machine-readable medium may include, but not limit to, an electronic, magnetic, optical, electromagnetic, infrared, or semiconductor system, apparatus, or device, or any suitable combination of the foregoing. More specific examples of the machine-readable storage medium may include electrical connections based on one or more wires, a portable computer disk, a hard disk, a RAM, a ROM, an erasable programmable read-only memory (EPROM or flash memory), an optical fiber, a portable compact disk read-only memory (CD-ROM), an optical storage, a magnetic storage device, or any suitable combination of the foregoing.

In order to provide interaction with a user, the systems and technologies described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local region network (LAN), wide region network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve management difficulty and weak business scalability defects of traditional physical hosts and Virtual Private Server (VPS) services.

The disclosure relates to the field of computer technologies, and particularly to the field of artificial intelligence (AI) such as deep learning and computer vision.

Artificial intelligence (AI) is a subject that learns simulating certain thinking processes and intelligent behaviors (such as learning, reasoning, thinking, planning) of human beings through computers, which covers hardware-level technologies and software-level technologies. The AI hardware technologies generally include technologies such as sensors, dedicated AI chips, cloud computing, distributed storage, big data processing, etc.; the AI software technologies mainly include computer vision technology, speech recognition technology, natural language processing (NLP) technology and machine learning (ML)/deep learning (DL), big data processing technology, knowledge graph (KG) technology, etc.

With the solutions of the disclosure, the building probability map of each remote sensing-image in the remote-sensing image sequence of the region to be detected is combined to determine the change of the building, and the accuracy of the change detection result of the building is improved.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the principle of this application shall be included in the protection scope of this application.

**Claims**

1. A method for detecting a change of a building, comprising:

   obtaining (101; 201; 301) a remote-sensing image sequence of a to-be-detected region;
   obtaining (102; 302) a building probability map corresponding to each remote-sensing image in the remote-sensing image sequence;
   determining (103; 205) a sub-region located by each building in the to-be-detected region based on the building probability map corresponding to each remote-sensing image;
   for each building,

   determining (104; 206; 305) an existence probability of the building in each remote-sensing image based on the sub-region located by the building and the building probability map corresponding to each remote-sensing image; and
   determining (105; 207; 306) a change condition of the building based on the existence probability of the building in each remote-sensing image.

2. The method as claimed in claim 1, wherein obtaining (102) the building probability map corresponding to each remote-sensing image in the remote-sensing image sequence comprises:

   for each remote-sensing image in the remote-sensing image sequence, obtaining (202) image blocks by segmenting the remote-sensing image;
   obtaining (203) building probability maps corresponding to the image blocks by inputting each image block into a semantic segmentation model; and
   generating (204) the building probability map corresponding to the remote-sensing image by splicing the building probability maps corresponding to the image blocks.

3. The method as claimed in claim 2, before inputting each image block into the semantic segmentation model, further comprising:

   obtaining an initial semantic segmentation model;
   obtaining training data, wherein the training data comprise sample image blocks and label data corresponding to each sample image block, the label data comprise at least one of: city planning information, map building information and third national land survey data; and
obtaining the semantic segmentation model by training the initial semantic segmentation model based on the sample image blocks and the label data corresponding to each sample image block.

4. The method as claimed in any one of claims 1 to 3, wherein the building probability map comprises a first probability that each pixel in the corresponding remote-sensing image belongs to a building; and determining (103) the sub-region located by each building in the to-be-detected region based on the building probability map corresponding to each remote-sensing image comprises:

   for each pixel in remote-sensing images, determining (303) a second probability of the pixel in the remote-sensing image sequence based on the first probability of the pixel in the building probability map corresponding to each remote-sensing image; and
   determining (304) the sub-region located by each building in the to-be-detected region based on the second probability of each pixel in the remote-sensing image sequence.

5. The method as claimed in claim 4, wherein determining (303) the second probability of the pixel in the remote-sensing image sequence based on the first probability of the pixel in the building probability map corresponding to each remote-sensing image comprises:

   obtaining first remote-sensing images from the remote-sensing image sequence, wherein the first remote-sensing image is a remote-sensing image with the first probability of the pixel greater than a first probability threshold; and
   obtaining the second probability of the pixel in the remote-sensing image sequence by performing a weighted average on the first probability of the pixel in each first remote-sensing image.

6. The method as claimed in claim 4 or 5, wherein determining (304) the sub-region located by each building in the to-be-detected region based on the second probability of each pixel in the remote-sensing image sequence comprises:

   obtaining a first pixel with a maximum second probability as a center pixel of each building based on the second probability of each pixel in the remote-sensing image sequence;
determining pixel boundaries of each building by combining the first pixel and a watershed algorithm; and
determining the sub-region located by each building in the to-be-detected region based on the pixel boundaries and the center pixel.

7. The method as claimed in any one of claims 1 to 6, wherein the building probability map comprises a first probability that each pixel in the corresponding remote-sensing image belongs to a building; and determining (104; 206; 305) the existence probability of the building in each remote-sensing image based on the sub-region located by the building and the building probability map corresponding to each remote-sensing image comprises:

for each remote-sensing image, determining the first probability that each pixel in the sub-region located by the building belongs to the building based on the building probability map corresponding to the remote-sensing image; and obtaining the existence probability of the building in the remote-sensing image by performing a weighted average on the first probability that each pixel in the sub-region located by the building belongs to the building.

8. The method as claimed in any one of claims 1 to 7, after obtaining the building probability map corresponding to each remote-sensing image in the remote-sensing image sequence, further comprising:

obtaining (403) an occlusion probability map corresponding to each remote-sensing image in the remote-sensing image sequence;
for each remote-sensing image, determining (404) an occlusion region in the remote-sensing image based on the occlusion probability map corresponding to the remote-sensing image; and
removing (405) a probability related to the occlusion region from the building probability map corresponding to the remote-sensing image.

9. The method as claimed in any one of claims 1 to 8, wherein determining (105; 207; 306) the change condition of the building based on the existence probability of the building in each remote-sensing image comprises:

for each remote-sensing image, determining that the building exists in the remote-sensing image in response to the existence probability of the building in the remote-sensing image being greater than or equal to a second probability threshold;

determining that the building does not exist in the remote-sensing image in response to the existence probability of the building in the remote-sensing image being less than the second probability threshold; and
determining the change condition of the building based on an existence of the building in each remote-sensing image.

10. An apparatus for detecting a change of a building, comprising:

a first obtaining module (501; 601), configured to obtain a remote-sensing image sequence of a to-be-detected region;
a second obtaining module (502; 602), configured to obtain a building probability map corresponding to each remote-sensing image in the remote-sensing image sequence;
a first determining module (503; 603), configured to determine a sub-region located by each building in the to-be-detected region based on the building probability map corresponding to each remote-sensing image;
a second determining module (504; 604), configured to determine, for each building, an existence probability of the building in each remote-sensing image based on the sub-region located by the building and the building probability map corresponding to each remote-sensing image; and
a third determining module (505; 605), configured to determine a change condition of the building based on the existence probability of the building in each remote-sensing image.

11. The apparatus as claimed in claim 10, wherein the second obtaining module (502; 602) comprises:

a segmenting unit, configured to, for each remote-sensing image in the remote-sensing image sequence, obtain image blocks by segmenting the remote-sensing image;
a first obtaining unit, configured to obtain building probability maps corresponding to the image blocks by inputting each image block into a semantic segmentation model; and
a splicing unit, configured to generate the building probability map corresponding to the remote-sensing image by splicing the building probability maps corresponding to the image blocks.

12. The apparatus as claimed in claim 10 or 11, further comprising:

a third obtaining module (606), configured to obtain an occlusion probability map corresponding to each remote-sensing image in the remote-sensing image sequence;

a fourth determining module (607), configured to, for each remote-sensing image, determine an occlusion region in the remote-sensing image based on the occlusion probability map corresponding to the remote-sensing image; and

a deleting module (608), configured to remove a probability related to the occlusion region from the building probability map corresponding to the remote-sensing image.

13. An electronic device, comprising:

at least one processor; and
a memory communicatively coupled to the at least one processor; wherein,
the memory is configured to store instructions executable by the at least one processor, and when the instructions are executed by the at least one processor, the at least one processor is cause to perform the method according to any one of claims 1 to 9.

14. A computer-readable storage medium storing computer instructions, wherein the computer instructions are configured to cause a computer to execute the method according to any one of claims 1 to 9.

15. A computer program product comprising a computer program, wherein the computer program is configured to execute the method according to any one of claims 1 to 9 when executed by a processor.

obtaining a remote-sensing image sequence of a to-be-detected region ⌐101

obtaining a building probability map corresponding to each remote-sensing image in the remote-sensing image sequence ⌐102

determining a sub-region located by each building in the to-be-detected region based on the building probability map corresponding to each remote-sensing image ⌐103

for each building, determining an existence probability of the building in each remote-sensing image based on the sub-region located by the building and the building probability map corresponding to each remote-sensing image ⌐104

determining a change condition of the building based on the existence probability of the building in each remote-sensing image ⌐105

FIG. 1

obtaining a remote-sensing image sequence of a to-be-detected region ⌐201

for each remote-sensing image in the remote-sensing image sequence, obtaining image blocks by segmenting the remote-sensing image ⌐202

obtaining building probability maps corresponding to the image blocks by inputting each image block into a semantic segmentation model ⌐203

generating the building probability map corresponding to the remote-sensing image by splicing the building probability maps corresponding to the image blocks ⌐204

determining a sub-region located by each building in the to-be-detected region based on the building probability map corresponding to each remote-sensing image ⌐205

for each building, determining an existence probability of the building in each remote-sensing image based on the sub-region located by the building and the building probability map corresponding to each remote-sensing image ⌐206

determining a change condition of the building based on the existence probability of the building in each remote-sensing image ⌐207

FIG. 2

| obtaining a remote-sensing image sequence of a to-be-detected region | ~301 |

| obtaining a building probability map corresponding to each remote-sensing image in the remote-sensing image sequence | ~302 |

| for each pixel in remote-sensing images, determining a second probability of the pixel in the remote-sensing image sequence based on the first probability of the pixel in the building probability map corresponding to each remote-sensing image | ~303 |

| determining the sub-region located by each building in the to-be-detected region based on the second probability of each pixel in the remote-sensing image sequence | ~304 |

| for each building, determining an existence probability of the building in each remote-sensing image based on the sub-region located by the building and the building probability map corresponding to each remote-sensing image | ~305 |

| determining a change condition of the building based on the existence probability of the building in each remote-sensing image | ~306 |

FIG. 3

obtaining a remote-sensing image sequence of a to-be-detected region ⌐~401

↓

obtaining a building probability map corresponding to each remote-sensing image in the remote-sensing image sequence ⌐~402

↓

obtaining an occlusion probability map corresponding to each remote-sensing image in the remote-sensing image sequence ⌐~403

↓

for each remote-sensing image, determining an occlusion region in the remote-sensing image based on the occlusion probability map corresponding to the remote-sensing image ⌐~404

↓

removing a probability related to the occlusion region from the building probability map corresponding to the remote-sensing image ⌐~405

↓

determining a sub-region located by each building in the to-be-detected region based on the building probability map corresponding to each remote-sensing image ⌐~406

↓

for each building, determining an existence probability of the building in each remote-sensing image based on the sub-region located by the building and the building probability map corresponding to each remote-sensing image ⌐~407

↓

determining a change condition of the building based on the existence probability of the building in each remote-sensing image ⌐~408

FIG. 4

apparatus 500 for detecting change of building

first obtaining module ⟶501

second obtaining module ⟶502

first determining module ⟶503

second determining module ⟶504

third determining module ⟶505

FIG. 5

apparatus 600 for detecting change of building

first obtaining module ⟶601

second obtaining module ⟶602

first determining module ⟶603

second determining module ⟶604

third determining module ⟶605

third obtaining module ⟶606

fourth determining module ⟶607

deleting module ⟶608

FIG. 6

FIG. 7